# EUROPEAN PATENT APPLICATION

(11) **EP 4 641 376 A1**
(43) Date of publication of application: **29.10.2025**
(21) Application number: 25166752.3
(22) Date of filing: 27.03.2025
(51) Int. Cl.: G06F 9/451, G06F 3/0481, G06F 3/04842

(54) **METHOD AND SYSTEM FOR RELATIVE PATH-BASED OBJECT IDENTIFICATION**

(30) Priority: 26.04.2024 KR 20240056172; 10.09.2024 KR 20240122795
(71) Applicant: Samsung SDS Co., Ltd., Seoul 05510 (KR)
(72) Inventor: Jung, Hwang Young, 05510 SEOUL (KR); Kim, Hyo Young, 05510 SEOUL (KR); Lee, Jae Cheol, 05510 SEOUL (KR)
(74) Representative: Glawe, Delfs, Moll

(57) **Abstract**

A method and a system for relative path-based object identification are provided. The method according to some embodiments may include receiving, by a first computing device, a selection of a first object and a second object from among a plurality of objects present on a first desktop screen from a user of the first computing device; identifying, by the first computing device, a relative path in a tree structure between the first and second objects; storing, by the first computing device, the identified relative path; and identifying, by the first computing device or a second computing device, the second object from among a plurality of objects present on a second desktop screen, using the first object and the stored relative path, wherein the first desktop screen is generated by the first computing device, and the second desktop screen is generated by the first computing device or the second computing device.

## Description

### BACKGROUND

### 1. Field

The present disclosure relates to a method and a system for relative path-based object identification, and more specifically, to technology for identifying objects by considering the hierarchical structure and relative positions of objects in a digital environment.

### 2. Description of the Related Art

Robotic Process Automation (RPA) technology is software technology used to automate repetitive and rule-based tasks, primarily to efficiently handle business processes. RPA typically consists of two stages: a recording stage and an execution stage. The execution stage may have the same meaning as the stage of locating or identifying target objects.

In the recording stage, a computing device records a user's actions to define an automation process. Subsequently, automated tasks are performed on the computing device based on the recorded content. During this process, the computing device that performs the recording stage may differ from the computing device that performs the execution stage.

In this case, differences in resolution or layout may arise between the computing devices used for the recording and execution stages, which can cause problems with conventional object identification methods. Specifically, traditional methods rely on the physical positions of objects displayed on the screen for identification. However, differences in resolution or layout may alter the physical positions of objects, thereby limiting the reliability of RPA's automation processes.

Therefore, new technology capable of accurately identifying objects regardless of changes in resolution or layout may be required.

While RPA technology is widely used to automate repetitive and rule-based tasks, existing technologies face challenges in reliably locating objects in diverse screen environments. Particularly when the recording and execution stages occur on different computing devices, changes in resolution or layout may reduce the accuracy of object identification. Traditional methods primarily depend on the physical positions of objects on the screen, but face reliability issues when the screen environments differ between the recording and execution stages.

Simply creating multiple scripts for various screen environments is inefficient and difficult to maintain, making it an impractical solution. Given these challenges, a new approach may be required to maintain a consistent automation process even in situations where screen resolution or layout changes. Therefore, technology that ensures the accuracy of object identification while maintaining consistency across different screen environments is necessary.

### SUMMARY

According to one embodiment of the present disclosure, to address these challenges, objects can be identified by utilizing the relationships between objects, particularly relative paths in a hierarchical structure (or tree structure). Identifying objects based on relative paths enables consistent identification results, regardless of changes in resolution or layout. This enhances the reliability of RPA systems and enables automation processes that are unaffected by changes in screen environments.

According to various embodiments of the present disclosure, a variety of methods for identifying objects based on relative paths can be provided to ensure the stable operation of RPA technology in diverse environments. These methods improve the flexibility and accuracy of RPA processes, providing a foundation for efficiently performing identical automation tasks across multiple environments.

The objectives of the present disclosure are not limited to those mentioned above, and other objectives not explicitly stated will be clearly understood by those skilled in the art based on the following description.

According to some embodiments of the present disclosure, there is provided a method for a relative path-based object identification executed by at least one processor, the method include: receiving, by a first computing device, a selection of a first object and a second object from among a plurality of objects present on a first desktop screen from a user of the first computing device; identifying, by the first computing device, a relative path in a tree structure between the first and second objects; storing, by the first computing device, the identified relative path; and identifying, by the first computing device or a second computing device, the second object from among a plurality of objects present on a second desktop screen, using the first object and the stored relative path, wherein the first desktop screen is generated by the first computing device, and the second desktop screen is generated by the first computing device or the second computing device.

**In** some embodiments, the second object is not uniquely identifiable using its attribute information, among the plurality of objects present on the second desktop screen, and is uniquely identifiable using the first object and the relative path between the first object and the second object.

**In** some embodiments, the relative path includes at least one path item, the at least one path item includes at least one information selected from a tree traversal direction or a sibling order number, the tree traversal direction indicates one of a parent node direction or a child node direction, and the sibling order number represents a relative order of sibling objects arranged under a parent object and is a number used to navigate a subsequent object to be traversed when the tree traversal direction is the child node direction.

In some embodiments, the tree structure is progressively expanded through a lazy loading method, and the lazy loading method selectively loads only some objects during a process of navigating the tree structure to ensure navigation performance.

In some embodiments, the identifying the relative path comprises: identifying a common root object between the first and second objects; identifying a relative path between the first object and the common root object; and identifying a relative path between the common root object and the second object using a sibling order number, the sibling order number represents a relative order of sibling objects arranged under a parent object and is a number used to navigate a subsequent object to be traversed when a tree traversal direction is a child node direction, the first object is an object serving as a reference for identifying the relative path, and the second object is a target object to be navigated using the relative path.

In some embodiments, the object serving as the reference for identifying the relative path has high suitability according to suitability criteria, the suitability criteria are related to whether the object is uniquely identifiable using attribute information, and the suitability criteria are determined based on at least one of the object's name, the object's value, or an area occupied by the object on a screen.

In some embodiments, the target object is a target of navigation regardless of its suitability value.

According to some embodiments of the present disclosure, there is provided a system, the system comprising at least one processor; and a memory storing a computer program executable by the at least one processor, wherein when the computer program is executed, the at least one processor performs operations of: receiving, at a first computing device, a selection of a first object and a second object from among a plurality of objects present on a first desktop screen from a user; identifying, at the first computing device, a relative path in a tree structure between the first and second objects; storing, at the first computing device, the identified relative path; and identifying, at the first computing device or a second computing device, the second object from among a plurality of objects present on a second desktop screen using the first object and the stored relative path, the first desktop screen is generated by the first computing device, and the second desktop screen is generated by the first computing device or the second computing device.

**In** some embodiments, the second object is not uniquely identifiable using its attribute information, among the plurality of objects present on the second desktop screen, and is uniquely identifiable using the first object and the relative path between the first and second objects.

**In** some embodiments, the relative path includes at least one path item, the at least one path item includes at least one type of information selected from a tree traversal direction or a sibling order number, the tree traversal direction indicates one of a parent node direction or a child node direction, and the sibling order number represents a relative order of sibling objects arranged under a parent object and is a number used to navigate a subsequent object to be traversed when the tree traversal direction is the child node direction.

In some embodiments, the tree structure is progressively expanded through a lazy loading method, and the lazy loading method selectively loads only some objects during a process of navigating the tree structure to ensure navigation performance.

In some embodiments, the operation of identifying the relative path comprises: identifying a common root object between the first and second objects; identifying a relative path between the first object and the common root object; and identifying a relative path between the common root object and the second object using a sibling order number, the sibling order number represents a relative order of sibling objects arranged under a parent object and is used to navigate a subsequent object to be traversed when a tree traversal direction is the child node direction, the first object is an object serving as a reference for identifying the relative path, and the second object is a target object to be navigated using the relative path.

In some embodiments, the object serving as the reference for identifying the relative path has high suitability according to suitability criteria, the suitability criteria are related to whether the object is uniquely identifiable using attribute information, and the suitability criteria are determined based on at least one of the object's name, the object's value, or an area occupied by the object on a screen.

In some embodiments, the target object is a target of navigation regardless of its suitability value.

According to some embodiments of the present disclosure, there is provided a computer program stored in a computer-readable medium and coupled to a computing device to include operations of: receiving, at a first computing device, a selection of a first object and a second object from among a plurality of objects present on a first desktop screen, from a user; identifying, at the first computing device, a relative path in a tree structure between the first and second objects; storing, at the first computing device, the identified relative path; and identifying, at the first computing device or a second computing device, the second object from among a plurality of objects present on a second desktop screen, using the first object and the stored relative path, wherein the first desktop screen is generated by the first computing device, and the second desktop screen is generated by the first computing device or the second computing device.

In some embodiments, the second object is not uniquely identifiable using its attribute information, among the plurality of objects present on the second desktop screen, and is uniquely identifiable using the first object and the relative path between the first and second objects.

In some embodiments, the relative path includes at least one path item, the at least one path item includes at least one type of information selected from a tree traversal direction or a sibling order number, the tree traversal direction indicates one of a parent node direction or a child node direction, and the sibling order number represents a relative order of sibling objects arranged under a parent object and is used to navigate a subsequent object to be traversed when the tree traversal direction is the child node direction.

In some embodiments, the tree structure is progressively expanded through a lazy loading method, and the lazy loading method selectively loads only some objects during a process of navigating the tree structure to ensure navigation performance.

In some embodiments, the operation of identifying the relative path comprises: identifying a common root object between the first and second objects; identifying a relative path between the first object and the common root object; and identifying a relative path between the common root object and the second object using a sibling order number, the sibling order number represents a relative order of sibling objects arranged under a parent object and is a number used to navigate a subsequent object to be traversed when the tree traversal direction is a child node direction, the first object is an object serving as a reference for identifying the relative path, and the second object is a target object to be navigated using the relative path.

In some embodiments, the object serving as the reference for identifying the relative path has high suitability according to suitability criteria, the suitability criteria are related to whether the object is uniquely identifiable using attribute information, and the suitability criteria are determined based on at least one of the object's name, the object's value, or an area occupied by the object on a screen.

It should be noted that the effects of the present disclosure are not limited to those described above, and other effects of the present disclosure will be apparent from the following description.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a diagram illustrating the configuration of an overall system in which a relative path-based object identification method according to an embodiment of the present disclosure is performed;
FIG. 2 is a diagram illustrating an example of a screen layout change caused by a zoom level adjustment according to an embodiment of the present disclosure;
FIG. 3 is a diagram illustrating an example of a screen layout change caused by a resolution change according to an embodiment of the present disclosure;
FIG. 4 is a diagram illustrating parent and child objects of a specific object according to an embodiment of the present disclosure;
FIG. 5 is a conceptual diagram illustrating a relative path-based object identification process according to an embodiment of the present disclosure;
FIG. 6 is a diagram illustrating an exemplary object structure tree according to an embodiment of the present disclosure;
FIG. 7 is a diagram illustrating an exemplary method for constructing an optimal object structure tree according to an embodiment of the present disclosure;
FIG. 8 is a diagram illustrating another exemplary method for constructing an optimal object structure tree according to an embodiment of the present disclosure;
FIG. 9 is a diagram illustrating an exemplary optimal object structure tree according to an embodiment the present disclosure;
FIG. 10 is a diagram illustrating a relative path and path items according to an embodiment of the present disclosure;
FIG. 11 is a diagram illustrating an example of deriving a parent node list according to an embodiment of the present disclosure;
FIG. 12 is a diagram illustrating an example of deriving a common root according to an embodiment of the present disclosure;
FIG. 13 is a diagram illustrating a path to the common root according to an embodiment of the present disclosure;
FIG. 14 is a diagram illustrating a path from a pin object (or reference object) to a target object according to an embodiment of the present disclosure;
FIG. 15 is a diagram illustrating a relative path between a reference object and a target object according to an embodiment of the present disclosure;
FIG. 16 is a diagram illustrating the step of identifying a target object through a relative path according to an embodiment of the present disclosure;
FIG. 17 is a diagram illustrating detailed processes for identifying the relative path in connection with FIG. 16; and
FIG. 18 is a block diagram illustrating the hardware configuration of a computing device for relative path-based object identification according to an embodiment of the present disclosure.

### DETAILED DESCRIPTION

Hereinafter, example embodiments of the present disclosure will be described with reference to the attached drawings. Advantages and features of the present disclosure and methods of accomplishing the same may be understood more readily by reference to the following detailed description of example embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In describing this disclosure, specific descriptions of relevant disclosed configurations or features are omitted where it is believed that such detailed descriptions would obscure the essence of the invention.

Unless otherwise defined, all terms used in the present specification (including technical and scientific terms) may be used in a sense that may be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure.

In this specification, the singular also includes the plural unless specifically stated otherwise in the phrase.

In addition, in describing the component of this disclosure, terms, such as first, second, A, B, (a), (b), may be used. These terms are only for distinguishing the components from other components, and the nature or order of the components is not limited by the terms.

Throughout the present disclosure, a relative structure may refer to a relative structure in a tree structure. In the present disclosure, a relative structure in a tree structure may refer to the relative positions of or the positional relationship between two or more nodes in a tree-shaped data structure. For example, a relative structure between a specific node and another node in a tree structure may be defined based on their positional relationship, such as parent nodes, child nodes, or sibling nodes.

In the present disclosure, navigation may have the same meaning as identification. Therefore, expressions such as navigating a target object and identifying a target object may be used interchangeably. Similarly, expressions such as finding a relative path, navigating a relative path, and identifying a relative path may also be used interchangeably.

Throughout the present disclosure, a reference object may have the same meaning as a pin object, and these terms may be used interchangeably. Additionally, a target object may refer to an object that is the subject of identification. Furthermore, a common root node in the present disclosure may have the same meaning as a common root object.

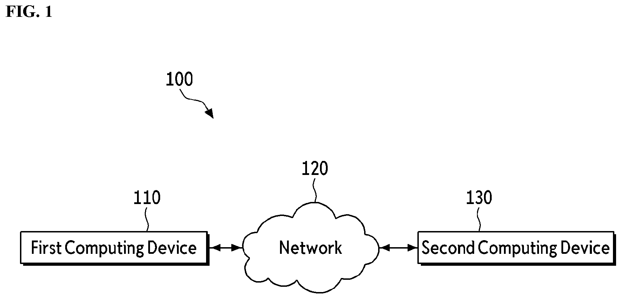

As will be described with reference to FIGS. 1 through 18, the present disclosure relates to Robotic Process Automation (RPA) technology, which may utilize a software robot (hereinafter referred to as a "bot") based on rules established to automate tasks that can be performed by a user on a PC. This technology enables the user to define a specific task for a target object on a screen using a predefined script, allowing the bot to automatically execute the specific task based on the predefined script.

In particular, the present disclosure proposes a method that enables the bot to function stably in the process of navigating the target object, even when screen environments change. Conventional script-based automation methods may require creating multiple scripts to address changes in screen environments, which is inefficient. To resolve this issue, the present disclosure provides a method for operating the bot consistently across various screen environments. This reduces the costs of script creation and maintenance while improving the stability and efficiency of automation.

In the present disclosure, the bot may be a software agent that can be used to perform RPA technology. The bot is designed to automate repetitive and rule-based tasks performed by the user, significantly enhancing work efficiency. The bot operates on a computing device and performs tasks according to predefined rules based on recorded workflows. For example, the bot can accurately reproduce the process of automating a specific task based on an object selected by the user on a screen. Additionally, the bot can operate across diverse environments, performing consistent tasks even on screens with different resolutions or layouts.

FIG. 1 is a diagram illustrating the configuration of an overall system in which a relative path-based object identification method according to an embodiment of the present disclosure is performed.

Referring to FIG. 1, an overall system 100 in which the relative path-based object identification method according to an embodiment of the present disclosure is performed may include a first computing device 110, a network 120, and a second computing device 130.

The first computing device 110 is a device that performs a recording stage related to RPA technology, recording tasks input by the user to define a subsequent automation process. The first computing device 110 provides an environment where the user can select a reference object and a target object and may include functionality for defining the hierarchical relationship between the selected objects in a tree structure and deriving a relative path.

The network 120 connects the first and second computing devices 110 and 130 and supports data transfer between the first and second computing devices 110 and 130. Relative path data recorded by the first computing device 110 may be transmitted to the second computing device 13- via the network 120, and this may include data transfer in a cloud environment or local network. For example, the network 120 may be implemented as any type of wired or wireless network, such as a Local Area Network (LAN), Wide Area Network (WAN), mobile radio communication network, or Wireless Broadband Internet (WiBro).

The second computing device 130 is a device that performs a navigation stage for the target object, identifying the target object based on the relative path recorded by the first computing device 110. The second computing device 130 may be the same as or different from the first computing device 110. This plays an important role in enabling the user to perform the same tasks in different physical environments.

A first user may input the reference object and the target object in a first desktop environment created by the first computing device 110 to perform the recording stage. The first user selects objects present on the screen, and the first computing device 110 may derive and store the relative path between the selected objects. During this process, the first computing device 110 may collect data to ensure accurate navigation despite the hierarchical relationship between the objects and changes in screen layout.

A second user may use the second computing device 130 to perform the navigation stage. The second computing device 130 navigates the target object based on the relative path data generated by the first computing device 110, ensuring consistent results even in environments with different resolutions or layouts. Through this, the reliability of RPA technology can be enhanced, and efficient automation tasks can be supported in diverse environments.

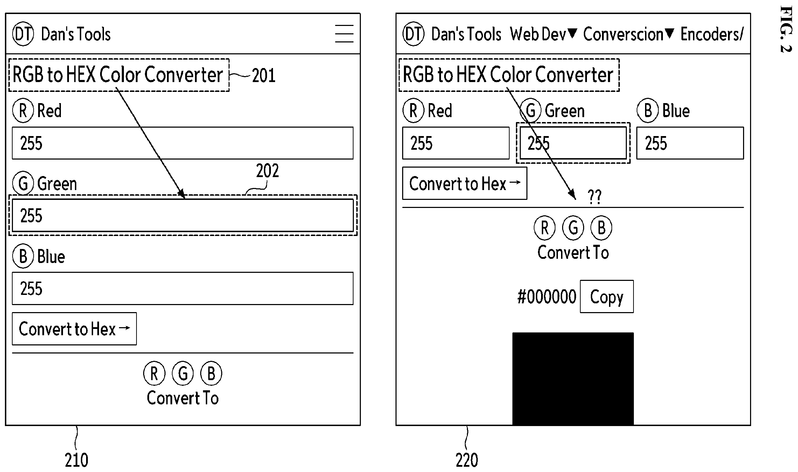

FIG. 2 is a diagram illustrating an example of a screen layout change caused by a zoom level adjustment according to an embodiment of the present disclosure.

FIG. 2 assumes a conventional method that records the physical distance between a reference object 201 and a target object 202 during the recording stage and identifies the target object during the execution stage based on this physical distance.

Referring to FIG. 2, reference numeral 210 represents a user interface with a high zoom level, and reference numeral 220 represents a user interface with a low zoom level. If the user performs the recording stage in the state of the user interface 210 and subsequently performs object navigation in the state of the user interface 220 based on information from the recording stage, the physical positions of the objects may change due to the difference in zoom level.

This issue becomes particularly apparent in environments where displays with varying resolutions or zoom levels are used. For example, as indicated by the user interfaces 210 and 220, when the zoom level changes, the spacing and arrangement of objects on the screen may shift from a vertical layout to a horizontal layout. Consequently, recording information based on physical distance data may lose its validity, increasing the risk of the bot failing to perform the intended operation or misidentifying objects.

To address this problem, the present disclosure introduces an object identification method utilizing relative paths within an object structure. This method enables objects to be accurately identified by navigating their hierarchical structure and relative positions, regardless of zoom level changes. Through this, the user can obtain consistent results across various screen environments, ensuring the stable operation of the bot.

In FIG. 2, the reference object 201 may be an object uniquely identified by attribute information, and the target object 202 may be an object not uniquely identified by attribute information because the target object 202 does not have a fixed value and may have a variable value depending on user input. For this reason, as will be described below, instead of directly identifying the target object 202 in a tree-structured hierarchy, the target object 202 may be identified by identifying the reference object 201 first and then using the relative path between the reference object 201 and the target object 202.

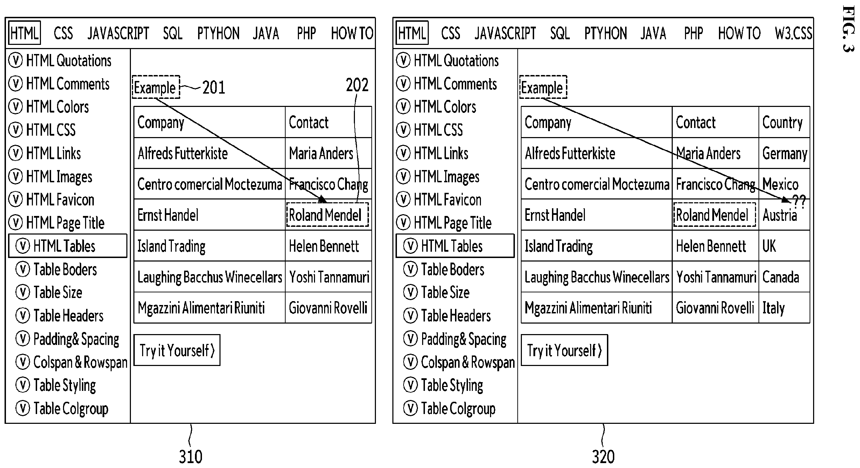

FIG. 3 is a diagram illustrating an example of a screen layout change caused by a resolution change according to an embodiment of the present disclosure.

FIG. 3 assumes a conventional method that records the physical distance between a reference object 201 and a target object 202 during the recording stage and identifies the target object 202 during the execution stage based on this physical distance.

Referring to FIG. 3, reference numeral 310 represents a desktop screen with a first resolution, and reference numeral 320 represents a desktop screen with a second resolution. If the user performs the recording stage on the desktop screen 310 with the first resolution, and subsequently performs object navigation on the desktop screen 320 with the second resolution, 320, the physical positions of the objects may change due to the resolution difference. This can cause the bot to search for objects in different locations from those set during the recording stage, leading to issues during RPA task execution.

This problem becomes more severe in environments where monitors with high and low resolutions are used together. For example, as indicated by the desktop screens 310 and 320, when the spacing and arrangement of objects on the screen are varied by a resolution change, recording information based on physical distance data is highly likely to lose its validity. As a result, the bot may fail to properly identify the objects or perform the intended operation.

To address this problem, the present disclosure introduces an object identification method utilizing relative paths within an object structure. This method enables objects to be accurately identified by navigating their hierarchical structure and relative positions, regardless of changes in screen layout. Through this, the user can obtain consistent results across various screen environments, ensuring the stable operation of the bot.

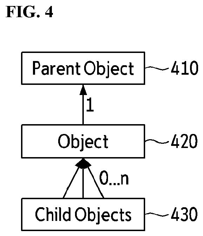

FIG. 4 is a diagram illustrating parent and child objects of a specific object according to an embodiment of the present disclosure.

FIG. 4 explains how objects form a hierarchical structure and how relationships between the objects are established.

Referring to FIG. 4, a specific object 420 plays a significant role within the hierarchical structure. The specific object 420 must have one parent object 410, which belongs to an upper layer and includes the specific object 420. The parent object 410 provides higher-level information to the specific object 420, enabling the specific object 420 to recognize its position within the hierarchical structure.

Additionally, the specific object 420 may have zero or multiple child objects 430. The child objects 430 belong to the lower layer of the specific object 420 and operate based on lower-level information of the specific object 420. This hierarchical structure defines clear relationships between objects and is essential for clarifying the roles and positions of objects within a complex user interface.

FIG. 4 demonstrates how the hierarchical structure of objects within an application can be represented in a tree format. All objects may undergo a nested traversal process, during which each object is linked to parent and child objects. This tree-format hierarchical structure clarifies the relationships between multiple objects, enabling more efficient object navigation and interaction.

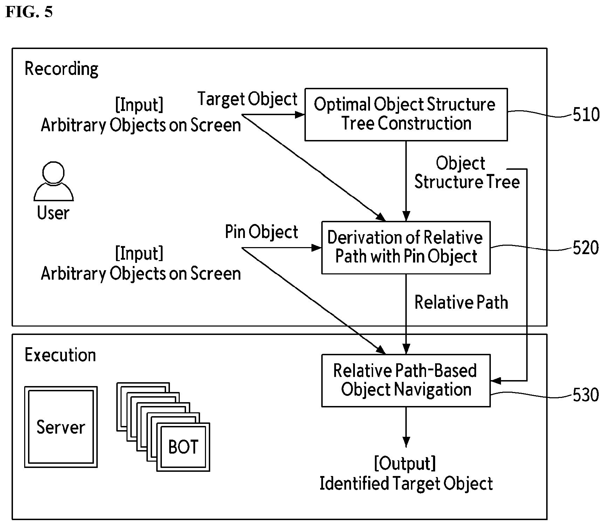

FIG. 5 is a conceptual diagram illustrating a relative path-based object identification process according to an embodiment of the present disclosure.

FIG. 5 visually represents the process in which the user identifies relative path data required by the bot for automation, based on specific objects on a screen and accurately identifies a target object using relative path data identified during the navigation or execution stage.

Referring to FIG. 5, reference numeral 510 illustrates the step of optimally constructing, by the user, an object structure tree based on input objects on the screen. **In** step 510, the hierarchical structure of the objects present on the screen is optimized into a tree format. When the user selects a target object from among arbitrary objects on the screen, an optimal object structure tree can be constructed with respect to the target object.

Reference numeral 520 illustrates the step of deriving the relative path between a pin object (or reference object) and the target object. **In** step 520, a relative path between the pin object (or reference object) and the target object, specified by the user, is identified within the optimal object structure tree. This relative path will later be used during the execution stage to accurately navigate the target object. Based on the optimal object structure tree constructed in step 510, the relative path between the target object and the pin object (or reference object) can be identified.

Reference numeral 530 illustrates the step in which the bot navigates the target object during execution, based on the previously derived relative path. The bot uses the relative path generated during the recording stage to consistently locate the target object across various screen environments. **In** this step, stable object navigation is enabled using only the optimal object structure tree and relative path information, regardless of screen resolution or zoom level.

According to an embodiment of the present disclosure regarding FIG. 5, steps 510, 520, and 530 enable the bot to accurately perform an automation process regardless of changes in screen layout or zoom level. This relative path-based object navigation method enhances the reliability of RPA tasks and provides consistent performance across diverse user environments.

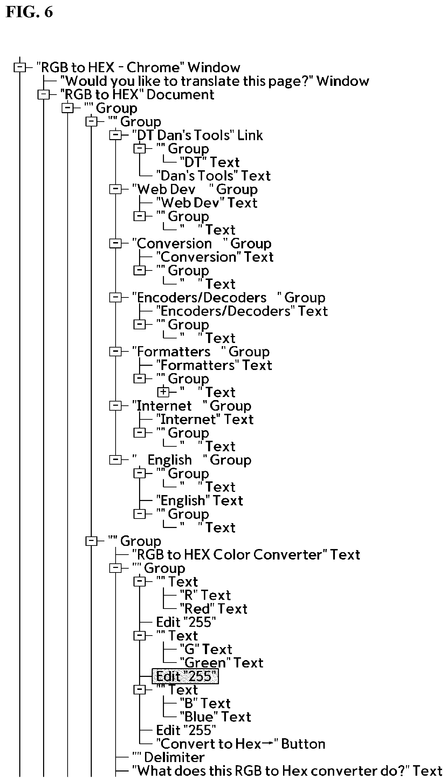

FIG. 6 is a diagram illustrating an exemplary object structure tree according to an embodiment of the present disclosure.

FIG. 6 represents how all objects within a user interface are hierarchically connected in a tree structure.

The object structure tree depicted in FIG. 6 includes the relationships among all objects present on the screen, with each object connected to its parent and child objects. This object structure tree is essential for clearly understanding the positions and relationships of objects when identifying a specific object or setting a relative path.

However, there are drawbacks to using the entire object structure tree. Reconstructing a tree that includes hundreds or thousands of objects every time may be inefficient. Specifically, this process can slow down processing speed, negatively affecting the user experience. **In** complex systems, in particular, loading and displaying all objects simultaneously can be time-consuming and unsuitable for real-time tasks.

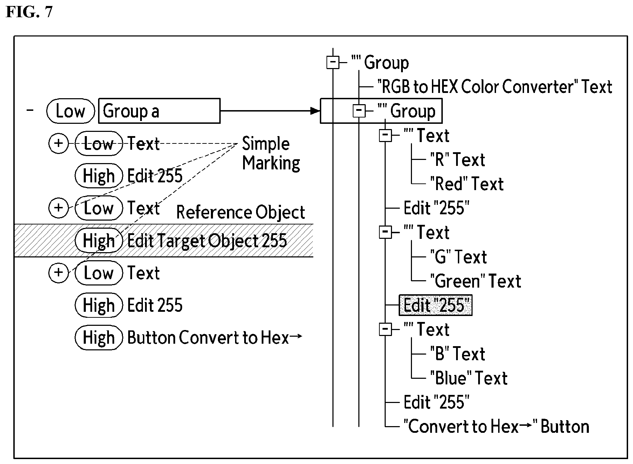

To overcome these drawbacks, the present disclosure introduces a method for identifying a relative path using an optimal object structure tree. The optimal object structure tree to be described with reference to FIG. 7 and subsequent figures allows for selective tree expansion as needed, enabling more efficient navigation and processing. Through this, the suer can quickly and accurately perform relative path-based object navigation.

FIG. 7 is a diagram illustrating an exemplary method for constructing an optimal object structure tree according to an embodiment of the present disclosure.

FIG. 7 illustrates the step-by-step process of constructing an optimized object structure tree for navigating and identifying a specific object.

Referring to FIG. 7, in the process of constructing the optimal object structure tree, each layer is traversed by moving to their upper layer to search for the parent object of a reference object specified by the user. In FIG. 7, the parent object of an "Edit 255" object, which is a reference object, is "Group a," and the child nodes of "Group a" are added to the object structure tree. During this process, each child node is evaluated for its suitability for designating the pin object (or reference object) to be included in the object structure tree.

If an object has "Name" or "Value" data and an appropriate region size, its suitability may be marked as "high." Conversely, if the object lacks both "Name" and "Value" data, its suitability may be marked as "low." The pin object (or reference object) serves as the starting point for identifying a target object and is thus required to exhibit "high" suitability. "Medium" suitability may indicate neither "low" nor "high" suitability.

Throughout the present disclosure, suitability is determined based on whether each object is uniquely identifiable using attribute information. This suitability criterion may include at least one of each object's name or value, the region occupied by each object on the screen, or each object's hierarchical relationship.

The reference object in each stage becomes the parent object from the previous stage, and the object tree structure is progressively expanded in this manner. In FIG. 7, using the parent object (i.e., "Group a") of the reference object (i.e., "Edit 255") as a reference, the upper-level objects and child nodes of the parent object are added. During object structure tree construction, child nodes are not pre-configured, but simply marked instead, allowing the object structure tree to expand only when necessary. This approach ensures optimal use of system resources while providing required information in a timely manner.

In this process, a lazy loading method may be used. The lazy loading method does not load all objects simultaneously but loads the sub-tree or detailed information of each required object only when needed. This makes the optimal object structure tree much more efficient than loading the entire object tree structure at once, reducing navigation time during relative path searches and improving processing performance. This also allows the user to navigate objects more quickly and accurately and perform RPA tasks efficiently.

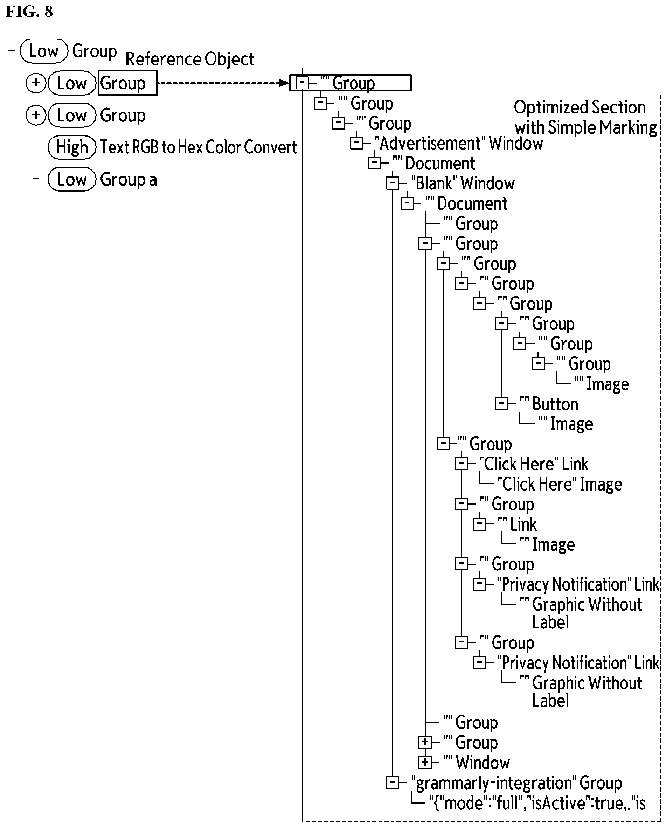

FIG. 8 is a diagram illustrating another example of a method for constructing an optimal object structure tree according to an embodiment of the present disclosure.

FIG. 8 demonstrates a method for improving efficiency by simply marking, instead of pre-configuring, sub-trees during tree construction based on a specific node.

Referring to FIG. 8, a tree is constructed around a reference object "Group." Here, the parent object of the reference object "Group" is already included in the tree, and child objects are sequentially added. However, instead of pre-configuring the sub-structure of all the child objects during tree expansion, some sub-trees are merely marked. The dotted box on the right side of FIG. 8 indicates this optimized section, where the actual data of the sub-trees is not loaded but expands only when required.

This marking-based simplified processing method plays a critical role in maximizing the efficiency of tree construction. By not loading unnecessary sub-tree data when the user navigates a specific object, system resources are conserved, and the overall speed of tree navigation is significantly improved. This method is particularly beneficial in complex user interfaces with numerous objects.

In conclusion, FIG. 8 visually illustrates an efficient method for optimizing and constructing an object structure tree. Using the method depicted in FIG. 8, tree navigation performance can be maximized.

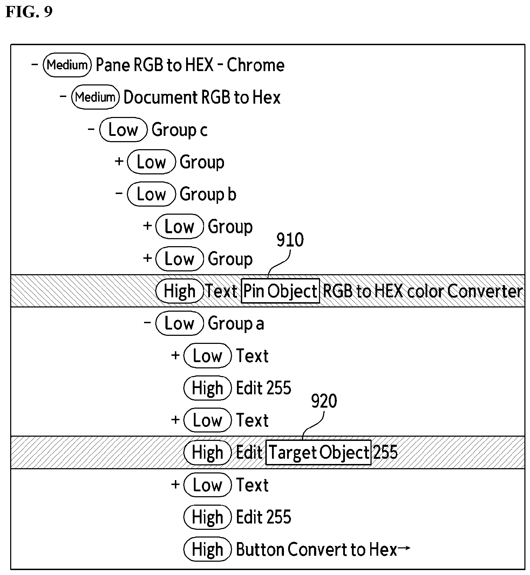

FIG. 9 is a diagram illustrating an example of an optimal object structure tree according to an embodiment of the present disclosure.

FIG. 9 illustrates how an optimized object structure tree is constructed based on a reference object.

Referring to FIG. 9, reference numeral 910 represents a pin object (or reference object) 910, i.e., an "RGB to HEX Color Converter" object, which is a text object. The pin object (or reference object) 910 is positioned in an upper layer of the optimized object structure tree and serves as the starting point for accurately navigating a target object 920. The target object 920 is a text input field marked as "Edit 255." The target object 920 is the ultimate object to be navigated or identified by the bot.

FIG. 9 clearly shows how an object structure tree including the pin object (or reference object) 910 and the target object 920 is hierarchically constructed. Parent objects of the reference object 910 are iteratively traversed until the reference object 910 reaches the application, and in each step, the parent and child objects in each layer are added to the object structure tree. In this process, an optimized minimal object structure tree is formed, allowing the user to visually verify the object structure tree and designate an appropriate pin object (or reference object) 910 and target object 920.

The optimal object structure tree depicted in FIG. 9 is optimized to include only necessary objects without any unnecessary information. In the optimal object structure tree of FIG. 9, the relationship between the pin object (or reference object) and the target object is clearly presented, enabling the bot to effectively identify the target object. Through this, consistent automation tasks are enabled across various screen environments.

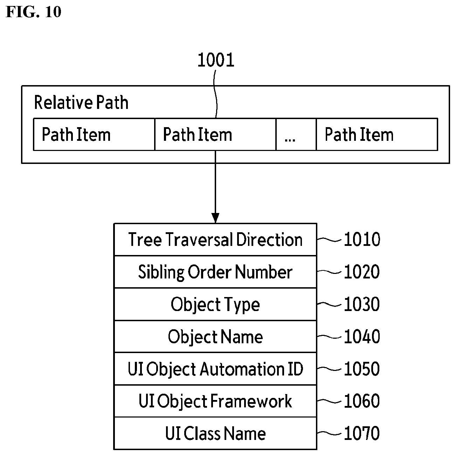

FIG. 10 is a diagram illustrating a relative path and path items according to an embodiment of the present disclosure.

Specifically, FIG. 10 illustrates the components of each path item used to construct a relative path between a pin object (or reference object) and a target object.

Referring to FIG. 10, the relative path comprises a plurality of path items 1001, each of which includes various information on a specific object to clarify the positional relationship between the specific object and others. FIG. 10 provides an example of diverse information included in each path item 1001.

Reference numeral 1010 indicates tree traversal direction. The tree traversal direction determines whether the specific object should be navigated in a level-up direction (or a parent node direction) or a level-down direction (or a child node direction) in the object structure tree. This information is crucial for guiding the bot on whether to navigate upward or downward within the object structure tree.

Reference numeral 1020 indicates sibling order number. The sibling order number specifies the order of the specific object among the children of its parent object. This information is essential for distinguishing and navigating the specific object among sibling nodes.

Reference numeral 1030 indicates the object type, which clarifies the category of the specific object. For example, the object type may include buttons, text fields, dropdown menus, etc. Through this, the bot can understand the characteristics of the specific object and perform the appropriate action for the specific object.

Reference numeral 1040 indicates the object name, which is a specific name assigned to a UI element. The object name serves as a unique identifier within the object structure tree, enabling quick identification of the specific object among similar objects.

Reference numeral 1050 indicates the UI object automation ID, a unique identifier automatically assigned to the UI object. Through this, the bot can distinguish the specific object clearly within the same screen. The automation ID is particularly useful for accurately identifying the specific object in a complex screen layout.

Reference numeral 1060 indicates the UI object framework. The UI object framework includes information on the software framework or library to which the specific object belongs, providing technical context for the bot to interact with the specific object.

Reference numeral 1070 indicates the UI class name, which specifies the class name of the specific object. The class name reflects the functional role or style of the specific object. Using the class name, the bot can understand the specific object's role and perform an appropriate operation.

The path items 1001 are combined to form a relative path between the pin object (or reference object) and the target object. Through this, the bot can achieve consistent navigation results across various screen environments.

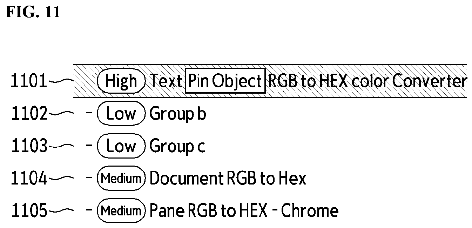

FIG. 11 is a diagram illustrating an example of deriving a parent node list according to an embodiment of the present disclosure.

For reference, FIGS. 11 through 14 illustrate part of the process of deriving a relative path between a pin object (or reference object) and a target object.

Referring to FIG. 11, parent nodes of "RGB to HEX Color Converter" text 1101, which is the pin object (or reference object), are derived in reverse order. This process, which is an essential step for accurately deriving the relative path between the pin object and the target object, traces upper objects of the pin object (or reference object) sequentially.

In the example of FIG. 11, the following parent nodes are sequentially derived: a "Group b" object 1102 as the immediate parent node of the pin object (or reference object), i.e., the "RGB to HEX Color Converter" object 1101, a "Group c" object 1103 as the parent node of the "Group b" node 1102, a "Document RGB to HEX" document object 1104 positioned above the "Group c" object 1103, and a "Pane RGB to HEX - Chrome" window object 1105 as the ultimate root node.

This process of deriving a parent node list plays a crucial role in setting a relative path. Based on the parent node list, the relative positions of the pin object (or reference object) and the target object can be accurately identified, and a precise path to the target object can be established. This parent node list helps the bot navigate objects quickly and accurately during relative path-based navigation.

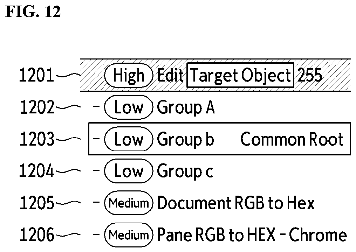

FIG. 12 is a diagram illustrating an example of deriving a common root according to an embodiment of the present disclosure.

FIG. 12 illustrates part of the process of deriving a relative path between a pin object (or reference object) and a target object. As mentioned earlier, FIGS. 11 through 14 represent the process of deriving a relative path between a pin object (or reference object) and a target object.

FIG. 12 visually shows the process of deriving a common root node between an "Edit 255" object 1201, which is the target object, and the pin object (or reference object). In this process, a common root node is identified among the parent nodes of the target object 1201, on the path from the target object to a root node 1105.

The "Edit 255" object 1201, which is the target object, is positioned as a child object of a "Group a" object 1202. A "Group b" object 1102, which is a parent node of the "Group a" object 1202, is derived as the common root node of the "RGB to HEX Color Converter" object 1101, which is the pin object (or reference object), and the "Edit 255" object 1201. This common root node, i.e., the "Group b" object 1102, is a parent node shared between the "RGB to HEX Color Converter" object 1101 and the "Edit 255" object 1201 and serves as a critical reference for subsequent relative path derivation.

After the common root node is derived, the path from the "Group b" object 1102 to the "Group c" object 1103, to the "Document RGB to HEX" object 1104, and ultimately to the root node 1105 (i.e., "Pane RGB to HEX - Chrome") is derived. Based on this path, a relative path may be set.

FIG. 12 demonstrates how deriving the common root node helps clarify the relative positions of the pin object (or reference object) and the target object. The common root node plays a key role in deriving a relative path, enabling the bot to perform consistent object navigation across various screen environments.

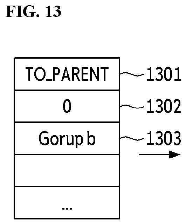

FIG. 13 is a diagram illustrating a path to a common root according to an embodiment of the present disclosure.

FIGS. 11 through 14 represent the process of deriving a relative path between a pin object (or reference object) and a target object.

FIG. 13 shows the process of recording the path from the pin object (or reference object) to the common root node. Referring to FIG. 13, the tree traversal direction of a path item is "TO_PARENT" (1301), indicating that traversal is performed in an upward direction (or in a parent node direction) from the pin object (or reference object).

Sibling order number 1302 is "0," indicating that the current path is in a "TO_PARENT" direction rather than in a "TO_CHILD" direction. Object name 1303 is "Group b", indicating that the name of the common root node 1102 is "Group b."

Recording subsequent connection paths to the common root node is continued, and this information is used during relative path navigation. The recorded path clearly shows the hierarchical relationship between the pin object (or reference object) and the common root object, assisting the bot in accurately navigating objects and performing tasks.

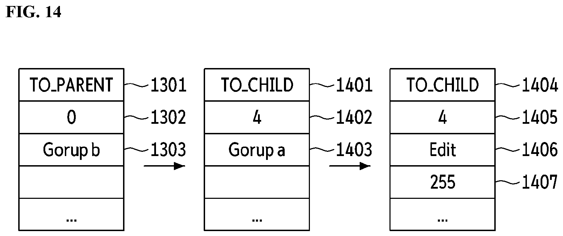

FIG. 14 is a diagram illustrating a path from a pin object (or reference object) to a target object according to an embodiment of the present disclosure.

FIGS. 11 through 14 represent parts of the process of deriving a relative path between a pin object (or reference object) and a target object.

FIG. 14 illustrates the process of recording a path from the pin object to the target object, which comprises a path leading from the pin object to the common root object and another path leading from the common root node to the target object. Specifically, this process visually represents the navigation path starting from the pin object (or reference object), passing through the common root node, i.e., a "Group b" object 1303, and reaching an "Edit 255" object, which is the target object.

Referring to FIG. 14, the tree traversal direction and sibling order number in a first path item are "TO_PARENT" (1301) and "0" (1302), respectively, indicating that the current path is in the "TO_PARENT" direction, rather than in the "TO_CHILD" direction. This path is the path from the pin object (or reference object) to the common root node, i.e., the "Group b" object 1303, and the "Group b" object 1303 may refer to the first node encountered in the "TO_PARENT" direction.

The tree traversal direction and sibling order number in a second path item are "TO_CHILD" (1401) and "4" (1402), respectively, indicating that a "Group a" object is the fourth child node encountered in the "TO_CHILD" direction from the common root node, i.e., the "Group b" object 1303.

The tree traversal direction and sibling order number in a third path item are "TO_CHILD" (1404) and "4" (1405), respectively, indicating that an "Edit" object 1406 is the fourth child node encountered in the "TO_CHILD" direction from the "Group a" object 1403.

Using these three path items, the path to the target object, i.e., the "Edit 255" object 1407, is recorded. The information related to this path aids the bot in accurately identifying the target object during navigation.

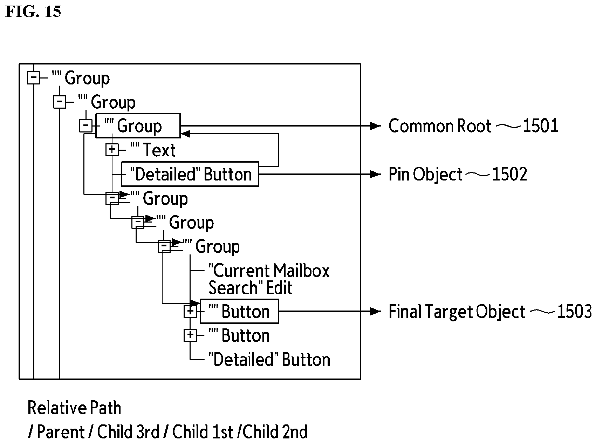

FIG. 15 is a diagram illustrating a relative path between a reference object and a target object according to an embodiment of the present disclosure.

FIG. 15 visually represents the path from a common root object (or common root) 1501 to a pin object 1502 to a target object 1503, showing how relative path navigation is performed.

Referring to FIG. 15, the common root object 1501 represents a shared upper node between the pin object (or reference object) 1502 and the final target object 1503, and relative path navigation is conducted in connection with the common root object 1501. The pin object 1502, which serves as the basis for the relative path navigation, corresponds to the starting point of relative path navigation. The final target object 1503, which is the final destination of the relative path navigation, is the object that the bot seeks to locate.

The relative path begins at the pin object 1502 and proceeds through "Parent," "Child 3rd," "Child 1st," "Child 1st," and "Child 2nd," as specified by its path items in accordance with the order in which the path items are displayed, ultimately reaching the final target object 1503. Each step of the process of navigating this relative path clarifies the relationship between parent and child nodes, ensuring consistent object navigation regardless of changes in screen layout.

FIG. 15 visually explains an important mechanism that supports the bot in accurately identifying objects across diverse screen environments through relative path navigation.

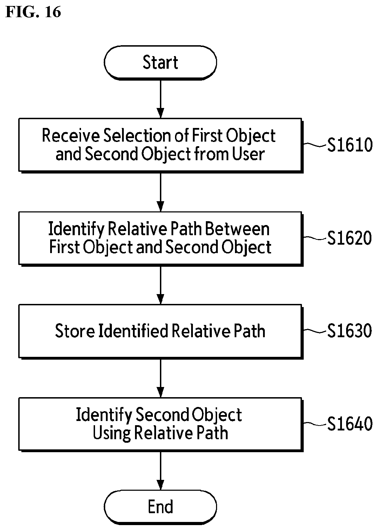

FIG. 16 is a diagram illustrating the step of identifying a target object through a relative path according to an embodiment of the present disclosure.

Step S1610 involves selecting a first object and a second object from the user. The first and second objects may be from among a plurality of objects present on a first desktop screen. The first desktop screen may be generated by a first computing device. Furthermore, a second desktop screen to be described later may be generated by the first computing device or a second computing device. The first and second computing devices may refer to the same device or may be separate devices.

Regarding step S1610, in one embodiment of the present disclosure, the first object may be a reference object (or pin object), and the second object may be a target object to be navigated or identified. The first object, which is the reference object, may be an object with high suitability according to suitability criteria, and the second object, which is the target object, may be an object with low suitability according to the suitability criteria. The suitability criteria may be related to whether each object is uniquely identifiable using attribute information.

Regarding step S1610, the first object may be easily identified by the user or bot based on its attribute information, such as its name, value, area occupied on the first desktop screen, or hierarchical relationship. Conversely, the second object may not be easily identifiable using only its attribute information. According to one embodiment of the present disclosure, the second object may not be directly identifiable within a tree-structured object hierarchy. Thus, a method that can easily identify the target object using the reference object and a relative path between the reference object and the target object may be used. In other words, the target object cannot be uniquely identifiable based solely on its attribute information but may instead be uniquely identified through the reference object and the relative path.

**In** one embodiment regarding step S1610, the user may sequentially select the first and second objects from among the plurality of objects on the first desktop screen.

Step S1620 may be the step of identifying the relative path between the first object (i.e., the reference or pin object) and the second object (i.e., the target object). Here, the relative path may refer to that within a tree structure.

**In** step S1620, the relative path may comprise at least one path item. As explained earlier with reference to FIG. 10, each path item may include tree traversal direction, sibling order number, object type, object name, UI object automation **ID,** UI object framework, and UI class name. Specifically, the tree traversal direction may indicate either a parent node direction or a child node direction. Additionally, the sibling order number represents the relative order of sibling objects arranged under a parent object. For example, when the tree traversal direction indicates the child node direction, the sibling order number may be used to navigate a subsequent object to be traversed.

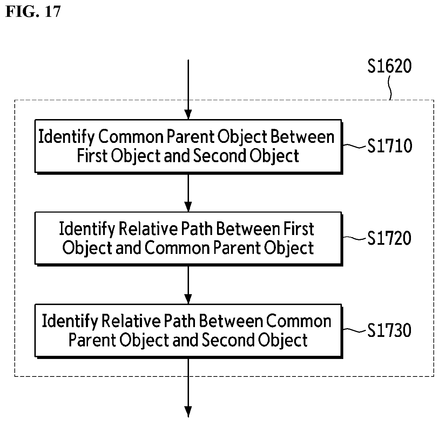

The step of identifying the relative path in step S1620 will be described later in detail with reference to FIG. 17. Therefore, omitted content related to step S1620 can be understood with reference to the description of FIG. 17.

Additionally, the tree structure in step S1620 may be progressively expanded using a lazy loading method. The lazy loading method, which is for use in optimizing memory usage during a tree structure traversal process, selectively loads only necessary objects to ensure the performance of navigation. Consequently, the relative path may be based on a hierarchical structure associated with the tree structure to be progressively expanded through lazy loading.

Step S1630 may be the step of storing the identified relative path. The entity responsible for storing the identified relative path may be the first computing device. The relative path refers to the relative path between the first object (i.e., the reference object) and the second object (i.e., the target object). The first computing device may store the relative path and transfer it to a server. The relative path stored by the first computing device may be later used to identify the second object (i.e., the target object) on a second desktop screen generated by the first or second computing device. Additionally, the bot in an RPA system may use the relative path to identify the second object.

Step S1640 may be the step of identifying the second object using the first object and the relative path between the first and second objects. The second object may be one of a plurality of objects present on the second desktop screen, and the second desktop screen may be generated by either the first or the second computing device.

FIG. 17 is a diagram illustrating detailed steps of relative path identification, as described with reference to FIG. 16.

Specifically, FIG. 17 illustrates sub-steps of step S1620.

Step S1710 may be the step of identifying the common root object between the first object (i.e., the reference object) and the second object (i.e., the target object). The common root object may be identified using the hierarchy of the tree structure.

Step S1720 may be the step of identifying a relative path between the first object and the common root object. The relative path between the first object and the common root object may be identified using at least one path item.

Step S1730 may be the step of identifying a relative path between the common root object and the second object (i.e., the target object). The relative path between the common root object and the second object may be identified using at least one path item. To determine the relative path between the common root object and the second object, sibling order number may be utilized. As explained earlier with reference to FIG. 10, the sibling order number represents the relative order of sibling objects arranged under a parent object and may be a number used to navigate a subsequent object to be traversed when the tree traversal direction is the child node direction.

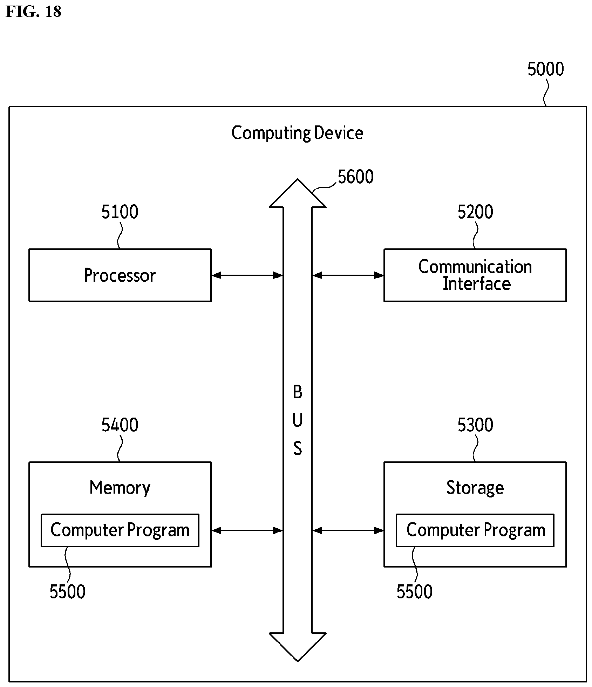

FIG. 18 is a block diagram illustrating the hardware configuration of a computing device for relative path-based object identification according to an embodiment of the present disclosure.

Referring to FIG. 18, a computing device (5000) may include one or more processors (5010), a bus (5060), a communication interface (5020), a memory (5040) that loads a computer program executed by the processor (5010), and a storage (5030) that stores a computer program (5050). However, FIG. 18 illustrates only the components relevant to embodiments of the present disclosure. Therefore, a person skilled in the art would understand that the computing device (5000) may include other general-purpose components in addition to those shown in FIG. 18. That is, the computing device (5000) may include various additional components beyond those depicted in FIG. 18. Additionally, in some cases, the computing device (5000) may be configured with certain components omitted from those illustrated in FIG. 18. The following describes each component of the computing device (5000). It should be noted that throughout this disclosure, the terms "computing device (5000)" and "computing system" may be used interchangeably.

The processor (5010) may control the overall operation of each component of the computing device (5000). The processor (5010) may include at least one or more types of processors, such as a Central Processing Unit (CPU), Micro Processor Unit (MPU), Micro Controller Unit (MCU), Graphic Processing Unit (GPU), or any other processor well known in the technical field of this disclosure. Additionally, the processor (5010) may perform computations for at least one application or program to execute operations/methods according to embodiments of the present disclosure. The computing device (5000) may include one or more processors.

Next, the memory (5040) may store various data, commands, and/or information. The memory (5040) may load a computer program (5050) from the storage (5030) to execute operations/methods according to embodiments of the present disclosure. The memory (5040) may be implemented as volatile memory, such as RAM, but is not limited thereto.

Next, the bus (5060) may provide a communication function between components of the computing device (5000). The bus (5060) may be implemented in various forms, including an Address Bus, Data Bus, and Control Bus.

Next, the communication interface (5020) may support wired or wireless Internet communication for the computing device (5000). Additionally, the communication interface (5020) may support various communication methods beyond Internet communication. To achieve this, the communication interface (5020) may include communication modules well known in the technical field of this disclosure.

Next, the storage (5030) may non-transitorily store one or more computer programs (5050). The storage (5030) may include non-volatile memory such as Read-Only Memory (ROM), Erasable Programmable ROM (EPROM), Electrically Erasable Programmable ROM (EEPROM), flash memory, a hard disk, a removable disk, or any computer-readable recording medium well known in the relevant technical field.

Next, the computer program (5050) may include one or more instructions that, when loaded into the memory (5040), cause the processor (5010) to perform operations/methods according to various embodiments of the present disclosure. That is, the processor (5010) may execute the loaded instructions to perform operations/methods according to various embodiments of the present disclosure.

For example, a computer program 5050 may include instructions that allow a first computing device to perform the operations of: receiving the selection of a first object and a second object from among a plurality of objects on a first desktop screen; identifying a relative path between the first and second objects within a tree structure; storing the identified relative path; and identifying the second object on a second desktop screen generated by the first or second computing device, using the stored relative path.

According to an embodiment of the present disclosure, stable and consistent object navigation is enabled across various environments through a relative path-based object identification method. A conventional RPA system, which is sensitive to changes in screen resolution or layout, often struggles to locate objects when executing the same task in different environments. The present disclosure addresses this issue by defining hierarchical relationships between objects within a tree structure and navigating objects utilizing the derived relative path.

This relative path-based object identification method offers the advantage of accurately identifying objects regardless of changes in screen resolution or layout. By progressively expanding the tree structure through lazy loading, system resources can be efficiently utilized, and memory usage can be optimized. Additionally, relative path-based navigation ensures stable object identification without relying on the position or attribute information of individual objects.

Another significant advantage of the present disclosure is its ability to greatly enhance the reliability of RPA systems. The present disclosure ensures consistent task results across various computing devices, regardless of changes in screen environments. This improves user experience, reduces the likelihood of errors in automated processes, and lessens the burden of system maintenance.

**In** conclusion, the relative path-based object identification method effectively resolves issues faced by conventional RPA systems, making task execution more reliable and efficient across diverse environments. This contributes to improved operational efficiency for businesses and enhances the quality of automated task processing.

So far, various embodiments of the present disclosure and their effects have been described with reference to FIGS. 1 through 18. The effects according to the technical ideas of the present disclosure are not limited to those mentioned above, and other effects not described may be clearly understood by those skilled in the art from the following description.

**In** the above description, all the components of the embodiments of the present disclosure have been described as being combined together or combined to operate, but the present disclosure is not limited thereto. That is, within the scope of the purpose of the present disclosure, the components may selectively combine and operate in various configurations.

Although operations are depicted in a specific order in the accompanying figures, they should not be understood as needing to be executed in the specific order or any sequential order, or to be all executed to achieve desired results. **In** certain situations, multitasking and parallel processing may be advantageous. Moreover, the separation of various components in the described embodiments should not be understood as mandatory, and the described program components and systems may generally be integrated into a single software product or packaged into multiple software products.

While embodiments of the present disclosure have been described with reference to the accompanying drawings, those skilled in the art will understand that the present disclosure may be implemented in other specific forms without changing its technical spirit or essential characteristics. Therefore, the described embodiments should be understood as illustrative rather than restrictive in every aspect. The scope of the present disclosure should be interpreted based on the following claims, and all technical ideas within the equivalent scope should be considered as included in the scope of the present disclosure.

## Claims

1. A relative path-based object identification method comprising:
receiving, by a first computing device, a selection of a first object and a second object from among a plurality of objects present on a first desktop screen from a user of the first computing device;
identifying, by the first computing device, a relative path in a tree structure between the first and second objects;
storing, by the first computing device, the identified relative path; and
identifying, by the first computing device or a second computing device, the second object from among a plurality of objects present on a second desktop screen, using the first object and the stored relative path,
wherein
the first desktop screen is generated by the first computing device, and
the second desktop screen is generated by the first computing device or the second computing device.

2. The relative path-based object identification method of claim 1, wherein the second object is not uniquely identifiable using its attribute information, among the plurality of objects present on the second desktop screen, and is uniquely identifiable using the first object and the relative path between the first object and the second object.

3. The relative path-based object identification method of claim 1, wherein
the relative path includes at least one path item,
the at least one path item includes at least one information selected from a tree traversal direction or a sibling order number,
the tree traversal direction indicates one of a parent node direction or a child node direction, and
the sibling order number represents a relative order of sibling objects arranged under a parent object and is a number used to navigate a subsequent object to be traversed when the tree traversal direction is the child node direction.

4. The relative path-based object identification method of claim 1, wherein
the tree structure is progressively expanded through a lazy loading method, and
the lazy loading method selectively loads only some objects during a process of navigating the tree structure to ensure navigation performance.

5. The relative path-based object identification method of claim **1,** wherein
the identifying the relative path comprises: identifying a common root object between the first and second objects; identifying a relative path between the first object and the common root object; and identifying a relative path between the common root object and the second object using a sibling order number,
the sibling order number represents a relative order of sibling objects arranged under a parent object and is a number used to navigate a subsequent object to be traversed when a tree traversal direction is a child node direction,
the first object is an object serving as a reference for identifying the relative path, and
the second object is a target object to be navigated using the relative path.

6. The relative path-based object identification method of claim 5, wherein
an object serving as a reference for identifying the relative path has high suitability according to suitability criteria,
the suitability criteria are related to whether the object is uniquely identifiable using attribute information, and
the suitability criteria are determined based on at least one of the object's name, the object's value, or an area occupied by the object on a screen.

7. The relative path-based object identification method of claim 5, wherein the target object is a target of navigation regardless of its suitability value.

8. A relative path-based object identification system comprising:
at least one processor; and
a memory storing a computer program executable by the at least one processor,
wherein
when the computer program is executed, the at least one processor performs operations of: receiving, at a first computing device, a selection of a first object and a second object from among a plurality of objects present on a first desktop screen from a user; identifying, at the first computing device, a relative path in a tree structure between the first and second objects; storing, at the first computing device, the identified relative path; and identifying, at the first computing device or a second computing device, the second object from among a plurality of objects present on a second desktop screen using the first object and the stored relative path,
the first desktop screen is generated by the first computing device, and
the second desktop screen is generated by the first computing device or the second computing device.

9. The relative path-based object identification system of claim 8, wherein the second object is not uniquely identifiable using its attribute information, among the plurality of objects present on the second desktop screen, and is uniquely identifiable using the first object and the relative path between the first and second objects.

10. The relative path-based object identification system of claim 8, wherein
the relative path includes at least one path item,
the at least one path item includes at least one type of information selected from a tree traversal direction or a sibling order number,
the tree traversal direction indicates one of a parent node direction or a child node direction, and
the sibling order number represents a relative order of sibling objects arranged under a parent object and is a number used to navigate a subsequent object to be traversed when the tree traversal direction is the child node direction.

11. The relative path-based object identification system of claim 8, wherein
the tree structure is progressively expanded through a lazy loading method, and
the lazy loading method selectively loads only some objects during a process of navigating the tree structure to ensure navigation performance.

12. The relative path-based object identification system of claim 8, wherein the operation of identifying the relative path comprises: identifying a common root object between the first and second objects; identifying a relative path between the first object and the common root object; and identifying a relative path between the common root object and the second object using a sibling order number,
the sibling order number represents a relative order of sibling objects arranged under a parent object and is used to navigate a subsequent object to be traversed when a tree traversal direction is the child node direction,
the first object is an object serving as a reference for identifying the relative path, and
the second object is a target object to be navigated using the relative path.

13. The relative path-based object identification system of claim 12, wherein
an object serving as a reference for identifying the relative path has high suitability according to suitability criteria,
the suitability criteria are related to whether the object is uniquely identifiable using attribute information, and
the suitability criteria are determined based on at least one of the object's name, the object's value, or an area occupied by the object on a screen.

14. The relative path-based object identification system of claim 12, wherein the target object is a target of navigation regardless of its suitability value.

15. A computer program stored in a computer-readable medium and coupled to a computing device to include operations of:
receiving, at a first computing device, a selection of a first object and a second object from among a plurality of objects present on a first desktop screen, from a user;
identifying, at the first computing device, a relative path in a tree structure between the first and second objects;
storing, at the first computing device, the identified relative path; and
identifying, at the first computing device or a second computing device, the second object from among a plurality of objects present on a second desktop screen, using the first object and the stored relative path,
wherein
the first desktop screen is generated by the first computing device, and
the second desktop screen is generated by the first computing device or the second computing device.
